(19)

Europäisches
Patentamt

European
Patent Office

Office européen
des brevets

(11)     EP 2 822 363 A2

(12)                    EUROPEAN PATENT APPLICATION

(43) Date of publication:
     07.01.2015   Bulletin 2015/02

(51) Int Cl.:
     *H05B 37/02* (2006.01)          *H05B 33/08* (2006.01)

(21) Application number: 13198571.5

(22) Date of filing: 19.12.2013

(84) Designated Contracting States:
     AL AT BE BG CH CY CZ DE DK EE ES FI FR GB
     GR HR HU IE IS IT LI LT LU LV MC MK MT NL NO
     PL PT RO RS SE SI SK SM TR
     Designated Extension States:
     BA ME

(30) Priority: 28.06.2013 JP 2013137452

(71) Applicant: Toshiba Lighting & Technology
     Corporation
     Yokosuka-shi, Kanagawa 237-8510 (JP)

(72) Inventor: Ide, Nagisa
     Kanagawa, 237-8510 (JP)

(74) Representative: Willquist, Sofia Ellinor
     Awapatent AB
     Junkersgatan 1
     582 35 Linköping (SE)

(54)    **Lighting system**

(57)     A lighting system (1) includes a lighting unit (30), a first detecting unit (10; 11), and a control unit (20). The lighting unit (30) lights a work plane on which a user performs work. The first detecting unit (10; 11) detects the brightness of an object plane in a predetermined range present in a predetermined direction from the user. The control unit (20) controls the lighting unit (30) to emit illumination light having target illuminance corresponding to the brightness detected by the first detecting unit (10; 11).

# FIG.1

**Description**

<u>FIELD</u>

Embodiments described herein relate generally to a lighting system.

<u>BACKGROUND</u>

It has been known to set an illuminance sensor and control, on the basis of a detection result of the illuminance sensor, an output of a luminaire to fix the illuminance of a predetermined position. Further, for example, daylight-based lighting control which utilizes natural light from the outdoors for lighting in the indoors has been known.

However, in the lighting control in the past, the luminaire is controlled to maintain fixed illuminance irrespective of fluctuation in external factors. Therefore, the luminaire is controlled to maintain fixed illuminance irrespective of external factors such as amounts of light in the daytime and the nighttime, seasons, and fluctuation in weather. For example, if daylight is used for indoor lighting, the luminaire is controlled to fix illuminance in the indoors even if a light amount and the like of the daylight fluctuate. In this way, in the lighting control in the past, it is not taken into account that illuminance that a user feels comfortable is likely to fluctuate according to the fluctuation in the external factors.

<u>BRIEF DESCRIPTION OF THE DRAWINGS</u>

FIG. 1 is a schematic diagram showing an example of a lighting system according to a first embodiment;
FIG. 2 is a diagram showing an example of the configuration of the lighting system according to the first embodiment;
FIG. 3A is a diagram showing an example of lighting section information stored in a storing unit of the lighting system according to the first embodiment;
FIG. 3B is a diagram showing an example of control pattern information stored in the storing unit of the lighting system according to the first embodiment;
FIG. 4 is a graph for explaining lighting control in the lighting system according to the first embodiment;
FIG. 5 is a flowchart for explaining an example of a flow of lighting control processing in the lighting system according to the first embodiment;
FIG. 6 is a diagram showing an example of the configuration of a lighting system according to a modification of the first embodiment;
FIG. 7 is a flowchart for explaining an example of a flow of lighting control processing in the lighting system according to the modification of the first embodiment;
FIG. 8 is a schematic diagram showing an overall configuration of a lighting system according to a second embodiment;
FIG. 9 is a diagram showing an example of the configuration of the lighting system according to the second embodiment;
FIG. 10A is a diagram for explaining lighting control in the lighting system according to the second embodiment;
FIG. 10B is another diagram for explaining the lighting control in the lighting system according to the second embodiment;
FIG. 11A is a diagram showing an example of the configuration of detecting unit information stored in a storing unit of the lighting system according to the second embodiment;
FIG. 11B is a diagram showing an example of the configuration of the lighting section information stored in the storing unit of the lighting system according to the second embodiment;
FIG. 11C is a diagram showing an example of the configuration of control pattern information stored in the storing unit of the lighting system according to the second embodiment;
FIG. 12 is a flowchart for explaining an example of a flow of lighting control processing in the lighting system according to the second embodiment;
FIG. 13 is a schematic diagram showing an overall configuration of a lighting system according to a third embodiment;
FIG. 14 is a diagram showing an example of the configuration of the lighting system according to the third embodiment;
FIG. 15A is a diagram showing an example of the configuration of lighting unit information stored in a storing unit of the lighting system according to the third embodiment;
FIG. 15B is a diagram showing an example of the configuration of control pattern information stored in the storing unit of the lighting system according to the third embodiment;
FIG. 16A is a diagram for explaining lighting control in the lighting system according to the third embodiment;
FIG. 16B is another diagram for explaining the lighting control in the lighting system according to the third embodiment;

FIG. 16C is still another diagram for explaining the lighting control in the lighting system according to the third embodiment; and

FIG. 17 is a flowchart for explaining an example of a flow of lighting control processing in the lighting system according to the third embodiment.

DETAILED DESCRIPTION

In general, according to an embodiment, there is provided a lighting system including: a lighting unit configured to light a work plane on which a user performs work; a first detecting unit configured to detect the brightness of an object plane in a predetermined range present in a predetermined direction from the user; and a control unit configured to control the lighting unit to emit illumination light having target illuminance corresponding to the brightness detected by the first detecting unit.

The lighting system in the embodiment may further include a second detecting unit configured to detect a posture direction of the user. The first detecting unit may detect the brightness of a different object plane according to a change in the posture direction detected by the second detecting unit.

The lighting system in the embodiment may further include a third detecting unit configured to detect a visual line direction of the user. The first detecting unit may detect the brightness of a different object plane according to a change in the visual line direction detected by the third detecting unit.

The first detecting unit included in the lighting system in the embodiment may detect average brightness of a wall surface in a predetermined range ahead in a visual line direction of the user.

The lighting system in the embodiment may further include a storing unit configured to store the brightness detected by the first detecting unit and the target illuminance of the lighting unit corresponding to the brightness in association with each other. The control unit may control the lighting unit to the target illuminance stored in the storing unit.

The storing unit included in the lighting system in the embodiment may store, in association with the brightness detected by the first detecting unit, target illuminances that should be attained at a plurality of points corresponding to distances from the object plane. The control unit may control a plurality of the lighting units to attain the target illuminances at the plurality of points.

The first detecting unit included in the lighting system in the embodiment may detect the brightness of a window surface set in a room in which the lighting unit is arranged.

The control unit included in the lighting system in the embodiment may control the lighting unit such that $y=-bx+c$ if $x<a$ and $y=d$ if $x \geq a$, where "x" may be a distance from the window surface to the lighting unit, "y" may be the illuminance of the work plane, and "a", "b", "c", and "d" may be constants.

The lighting system in the embodiment may further include a fourth detecting unit configured to detect time. The control unit may cause values of the constants "a" and "b" to fluctuate according to the time detected by the fourth detecting unit.

The control unit included in the lighting system in the embodiment may control, if the brightness of the window surface detected by the first detecting unit is larger than a first value and a distance between the window surface and the work plane is smaller than a second value, the illuminance of the work plane to change according to the distance from the window surface and control, if the brightness of the window surface is equal to or smaller than the first value or the distance between the window surface and the work plane is equal to or larger than the second value, the illuminance of the work plane to be a fixed value.

The control unit included in the lighting system in the embodiment may control, if the brightness of the window surface detected by the first detecting unit is larger than a first value and a distance between the window surface and the work plane is smaller than a second value, the illuminance of the work plane to change according to the distance from the window surface and control a rate of the change to change according to the brightness of the window surface.

According to another embodiment, there is provided a lighting system including: a plurality of lighting units arranged in a plurality of positions at different distances from the window surface; a plurality of detecting units configured to detect illuminances in the plurality of positions at the different distances from the window surface; and a control unit configured to determine, on the basis of the illuminances detected by the plurality of detecting units, an illuminance curve for specifying a relation between target illuminances applied to the plurality of lighting units and the distances from the window surface and control the plurality of lighting units on the basis of the illuminance curve.

The control unit included in the lighting system in the embodiment may increase the gradient of the illuminance curve as the illuminance in the vicinity of the window surface is higher and reduce the gradient of the illuminance curve as the illuminance in the vicinity of the window surface is lower.

The control unit included in the lighting system in the embodiment may cause the gradient of the illuminance curve to fluctuate according to a period of time.

The lighting system in the embodiment may further include: a storing unit configured to store a plurality of illuminance curves in association with at least one of incident angles of the sunlight, times, seasons, and weathers; and a second detecting unit configured to detect at least one of an incident angle of the sunlight, time, season, and weather. The control unit may determine one of the illuminance curves stored in the storing unit as the illuminance curve according to at least one of the incident angle of the sunlight, the time, the season, and the weather detected by the second detecting unit.

Lighting systems according to embodiments of the present invention are explained below with reference to the drawings. In the embodiments, components having the same functions are denoted by the same reference numerals and signs and redundant explanation of the components is omitted.

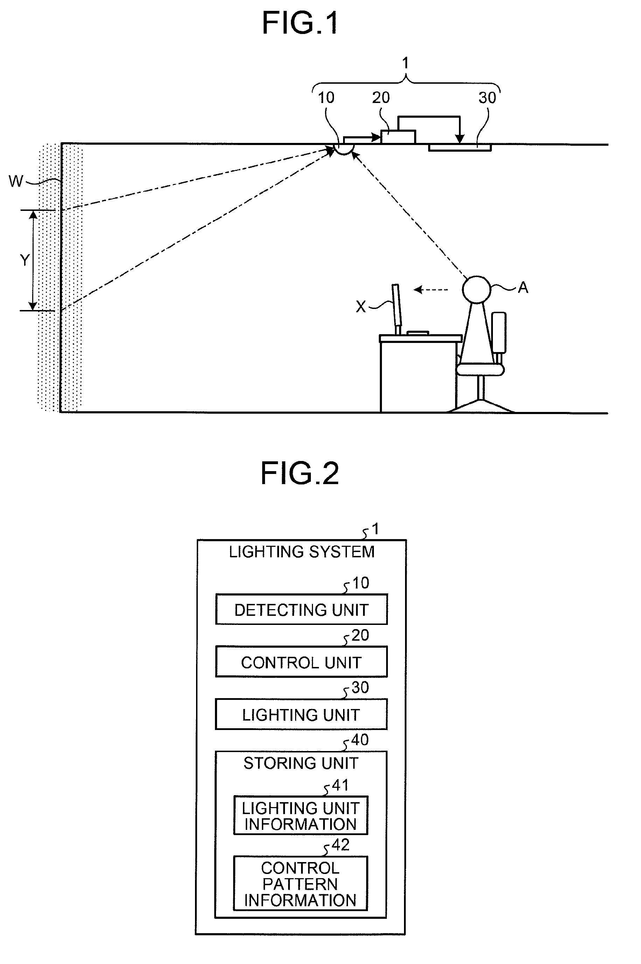

FIG. 1 is a schematic diagram showing an example of a lighting system 1 according to a first embodiment. FIG. 2 is a diagram showing an example of the configuration of the lighting system 1 according to the first embodiment. The example of the configuration of the lighting system 1 according to the first embodiment is explained with reference to FIGS. 1 and 2.

The lighting system 1 executes, for example, lighting control for a room where a user A works while viewing a work plane X of a personal computer (PC) or the like. In FIG. 1, the user A is seated facing the direction of the work plane X. A wall surface W is located ahead in the visual line direction of the user A. The lighting system 1 is arranged in the ceiling above the user A.

As shown in FIGS. 1 and 2, the lighting system 1 according to the first embodiment includes a detecting unit 10, a control unit 20, a lighting unit 30, and a storing unit 40.

The detecting unit 10 (a first detecting unit) detects the brightness of an object plane in a predetermined range present in a predetermined direction from the user A. For example, the detecting unit 10 detects the brightness in a predetermined range of the wall surface W located ahead in the visual line direction of the user A. Specifically, the detecting unit 10 detects average brightness in the predetermined range. A surface set as a brightness detection target by the detecting unit 10 is referred to as an object plane Y. The detecting unit 10 sends the detected brightness to the control unit 20.

A setting method for the object plane Y is not specifically limited. For example, a region in which a vertical surface having a size of 1 meter in the up down direction and 1 meter in the left right direction from the height of the eyes of the user in a seated state is projected on the wall surface W may be set as the object plane Y. An entire region present within a visual field when the user is viewing the work plane X may be set as the object plane Y. The object plane Y is not limited to a range on the wall surface W. If the ceiling, the floor surface, or the like is present within the visual field of the user, the ceiling or the floor surface may be also included in the object plane Y, the brightnesses of the wall surface, the ceiling surface, and the floor surface may be detected, and average brightness may be calculated. The object plane Y may be set to include a secondary reflection surface or the like. It is desirable to set the object plane Y to include a surface affecting how the user feels comfortableness of illumination light.

The control unit 20 determines, on the basis of information concerning brightness detected by the detecting unit 10, the illuminance of the work plane X illuminated by the lighting unit 30 and controls the lighting unit 30 to attain the determined illuminance. In the first embodiment, the control unit 20 determines an output of the lighting unit 30 referring to the storing unit 40 and controls the output. For example, the control unit 20 controls the illuminance of the work plane X to be high if average brightness in a predetermined range of the wall surface ahead of the user in the visual line direction is high and controls the illuminance of the work plane X to be low if the average brightness is low. A correlation between the average brightness of the object plane Y and the illuminance of the work plane X that the user feels comfortable is explained below.

The control unit 20 is realized by an integrated circuit such as an ASIC (Application Specific Integrated Circuit) or a PGA (Field Programmable Gate Array). The control unit 20 is realized by, for example, a CPU (Central Processing Unit) or an MPU (Micro Processing Unit) executing a computer program stored in a storage device.

The lighting unit 30 is not specifically limited as long as the lighting unit 30 is a luminaire that can be set on the ceiling or the like and can light a work plane at predetermined illuminance. An arbitrary luminaire can be used as the lighting unit 30. For example, an incandescent lamp, a fluorescent lamp, an LED (Light Emitting Diode), or the like can be used as the lighting unit 30. In FIG. 1, the lighting unit 30 is set on the ceiling surface. However, a setting place of the lighting unit 30 is not limited to this. The lighting unit 30 can be set in an arbitrary position as long as the position is a position where the work plane can be lit.

The storing unit 40 stores, for example, information concerning brightness detected by the detecting unit 10. The storing unit 40 stores, for example, information concerning the lighting unit 30 controlled by the lighting system 1. The storing unit 40 stores information used for the lighting control by the control unit 20. In the example shown in FIG. 2, the storing unit 40 stores lighting unit information 41 and control pattern information 42.

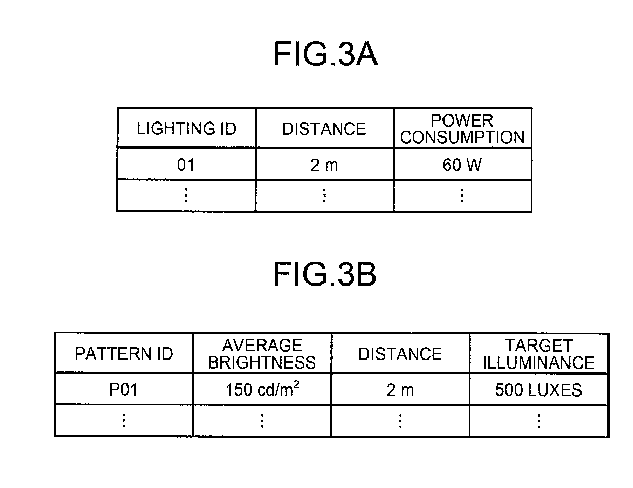

FIG. 3A is a diagram showing an example of the lighting unit information 41 stored in the storing unit 40 of the lighting system 1 according to the first embodiment. As shown in FIG. 3A, the storing unit 40 may store information concerning a luminaire controlled by the lighting system 1. In FIG. 3A, in association with "lighting ID: 01", a distance "2 m" from the wall surface W to a luminaire specified by the lighting ID and power consumption "60 W" are stored. In the example shown in FIG. 1, one luminaire is shown as the lighting unit 30. However, the lighting system 1 may be configured to include a plurality of separate luminaires and control the plurality of luminaires.

FIG. 3B is a diagram showing an example of the control pattern information 42 stored in the storing unit 40 of the lighting system 1 according to the first embodiment. In FIG. 3B, a pattern ID (Identifier) for uniquely identifying control patterns, average brightness of the object plane Y, a distance from the wall surface W to the lighting unit 30, and target illuminance that the lighting unit 30 should attain to light the work plane X at desired brightness are stored in association with each other. For example, in FIG. 3B, average brightness "150 candela/m$^2$", a distance "2 m" from the wall surface W, and target illuminance "50 luxes" are stored in association with a pattern ID "P01".

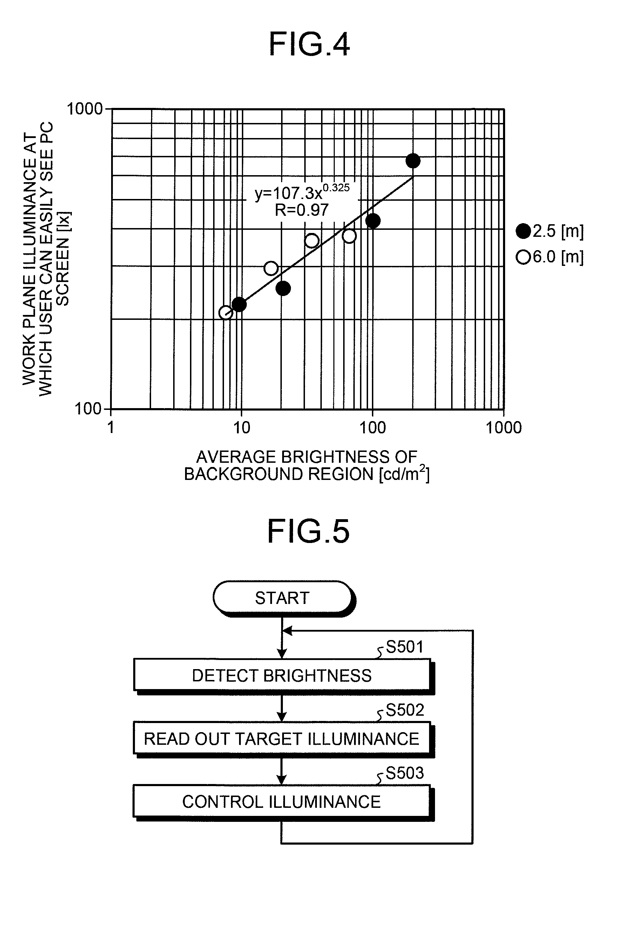

Lighting control in the lighting system 1 according to the first embodiment is explained with reference to FIG. 4. FIG. 4 is a graph for explaining lighting control in the lighting system 1 according to the first embodiment.

In relation to the lighting control of the lighting system 1 according to the first embodiment, the inventors performed an experiment in order to check a relation between the illuminance of the work plane that the user felt comfortable and average brightness of a background region, which was the background of the work plane viewed from the user. The user sat and viewed the work plane as shown in FIG. 1. The inventors changed brightness of the background region (equivalent to the object plane Y shown in FIG. 1), which was the background of the work plane viewed from the user, and dimmed the lighting unit to illuminance that the user felt comfortable. Two conditions were set for the position of the user, i.e., 2.5 meters [m] from the wall surface W and 6.0 meters [m] from the wall surface W. In order to change the average brightness of the background region, the inventors set four conditions, i.e., morning, noon, evening, and night as periods of time. The inventors performed an experiment for n (n is an integer of 9 to 19) subjects under eight conditions in total. Average values of experiment results concerning each of the eight conditions are plotted in a graph shown in FIG. 4.

In FIG. 4, the illuminance (unit: lux) of the work plane at which the user felt it easy to see the work plane (a PC screen) is shown on the ordinate. In FIG. 4, average brightness (unit: candela/m$^2$) of the background region, i.e., a predetermined region of the wall surface is shown on the abscissa. As shown in FIG. 4, a correlation coefficient R between the average brightness of the background region and the illuminance of the work plane at which the user feels it easy to see the work plane is 0.97. As it is seen from this, a significant correlation was found between the average brightness of the background region and the illuminance of the work plane at which the user feels it easy to see the work plane. Note that, in FIG. 4, "y" represents the illuminance of the work plane and "x" represents the average brightness of the background region. As shown in FIG. 4, in the experiment, an approximation formula $y = 107.3x^{0.325}$ was obtained.

In the first embodiment, the average brightness of the background region and target illuminance of the work plane that should be attained are calculated in advance on the basis of the correlation obtained by the experiment in this way and stored in the storing unit 40 as the control pattern information 42. The control unit 20 reads out the target illuminance of the work plane associated with the average brightness of the background region detected by the detecting unit 10 from the control pattern information 42 of the storing unit 40 and controls the lighting unit 30 to attain the read-out target illuminance.

FIG. 5 is a flowchart for explaining an example of a flow of lighting control processing in the lighting system 1 according to the first embodiment. The example of the flow of the lighting control processing in the first embodiment is explained with reference to FIG. 5.

First, when the processing is started, the detecting unit 10 detects the brightness of an object plane in a predetermined range present in a predetermined direction from the user (Act 501). That is, in the first embodiment, the detecting unit 10 detects average brightness of the object plane Y in a predetermined range on the wall surface W present ahead in the visual line direction. The detecting unit 10 sends the detected average brightness to the control unit 20. The control unit 20 reads out, from the storing unit 40, target illuminance corresponding to the average brightness sent from the detecting unit 10 (Act 502). The control unit 20 controls the illuminance of the lighting unit 30 to be the read-out target illuminance (Act 503). The lighting control processing ends.

Note that, in FIG. 5, the lighting control processing is shown as a loop. The detecting unit 10 continuously detects brightness and executes control. However, the lighting control processing is not limited to the example shown in FIG. 5. The lighting control processing may be executed in every predetermined period. The lighting control processing may be started with a designation input from the user as a trigger. The lighting control processing may be executed, for example, if the brightness detected by the detecting unit 10 exceeds a predetermined threshold or if the brightness falls below a predetermined threshold.

In the explanation in the first embodiment, the illuminance of the lighting unit 30 is adjusted on the basis of the average brightness of the object plane Y in the predetermined range on the wall surface W without taking into account the influence of external light. However, the adjustment of the illuminance of the lighting unit 30 is not limited to this. The control unit 20 may calculate the influence of the lighting unit 30 on the brightness of the wall surface W in advance. The detecting unit 10 may subtract a contribution by the lighting unit 30 from the average brightness detected by the detecting unit 10. Consequently, the control unit 20 can set the illuminance of the lighting unit 30 taking into account the influence of light other than the lighting unit 30 such as external light and the sunlight. In this case, for example, the control unit 20 calculates, on the basis of a calculated contribution of the external light and the like, a ratio of contribution of the external light and the like to the illuminance of the work plane. The control unit 20 adjusts, according to the calculated ratio, "target illuminance" stored as control pattern information and controls the lighting unit 30 to attain the target illuminance after the adjustment. Note that the control unit 20 only has to store the previous control history in the storing unit 40 and acquire a contribution by illumination light of the lighting unit 30 by reading out the control history from the storing unit 40 as appropriate.

As explained above, the lighting system 1 according to the first embodiment includes the lighting unit 30 configured to light the work plane X on which the user A performs work, a first detecting unit 10 configured to detect brightness of the object plane Y in a predetermined range present in a predetermined direction from the user A, and the control unit 20 configured to control the lighting unit 30 to emit illumination light having target illuminance corresponding to the brightness detected by the first detecting unit 10. Therefore, it is possible to control the illuminance of the lighting unit 30 taking into account an external factor that affects how the user feels comfortableness of lighting. More specifically, it is possible to adjust the illuminance of the work plane X of the user A taking into account the brightness of the object plane Y present in the predetermined direction from the user A. Therefore, it is possible to determine the illuminance of the work plane X taking into account the influence of the brightness of another surface, that is, the object plane Y affecting the visual sense of the user A other than the work plane X. Therefore, it is possible to adjust the work plane X of the user A to illuminance that the user A feels more comfortable. It is possible to improve comfortableness given to the user by lighting.

In the first embodiment, it is possible to calculate a contribution of the external light and the like to the brightness detected by the detecting unit and adjust the target illuminance according to the calculated contribution. Therefore, it is possible to select appropriate target illuminance and improve comfortableness of lighting for the user taking into account a state of the previous lighting control.

In the first embodiment, the object plane Y is set on the wall surface W ahead in the visual line direction of the user in advance and average brightness of the surface is detected. However, the detection of the average brightness is not limited to this. It is also possible to detect a posture direction and a visual line direction of the user A every time and set the object plane Y according to the detected posture direction and visual line direction. Such an example is explained as a modification of the first embodiment.

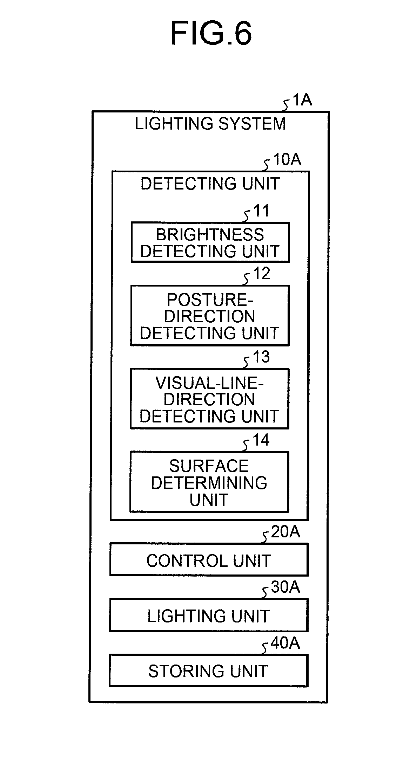

FIG. 6 is a diagram showing an example of the configuration of a lighting system 1A according to the modification of the first embodiment. As in the first embodiment, the lighting system 1A according to the modification of the first embodiment includes a detecting unit 10A, a control unit 20A, a lighting unit 30A, and a storing unit 40A. The modification of the first embodiment is different from the first embodiment in that the detecting unit 10A includes a brightness detecting unit 11 (a first detecting unit), a posture-direction detecting unit 12 (a second detecting unit), a visual-line-direction detecting unit 13 (a third detecting unit), and a surface determining unit 14. Functions and components different from the functions and the components in the first embodiment are explained below. Explanation of the same functions and components is omitted.

Like the detecting unit 10 shown in FIG. 2, the brightness detecting unit 11 detects the brightness (average brightness) of the object plane Y such as the wall surface W. However, unlike the detecting unit 10, the brightness detecting unit 11 detects, every time the brightness detecting unit 11 detects brightness, the brightness of an object plane set on the basis of a detection result of the posture-direction detecting unit 12 and/or the visual-line-direction detecting unit 13. The setting of an object plane is explained below.

The posture-direction detecting unit 12 detects a posture direction of the user A. That is, the posture-direction detecting unit 12 detects a direction that the body of the user A faces. For example, the posture-direction detecting unit 12 detects that the user A faces the obliquely right direction or faces upward. It is also conceivable that the user A moves a work plane of a PC or the like during work. In such a case, it is also conceivable that the posture-direction detecting unit 12 detects a change in an arrangement direction of the PC itself. However, in this embodiment, the posture-direction detecting unit 12 detects a change in the posture direction of the user A.

Like the detecting unit 10 shown in FIG. 1, the posture-direction detecting unit 12 may be arranged on the ceiling surface or may be set in an arbitrary place as long as the posture-direction detecting unit 12 can detect the posture direction of the user A such as on the floor surface and on the desk. The posture-direction detecting unit 12 is, for example, an infrared sensor or a motion sensor. The posture-direction detecting unit 12 detects, for example, the direction of the back or the direction of the head of the user A and sets the direction as the posture direction.

The visual-line-direction detecting unit 13 detects a visual line direction of the user A. That is, the visual-line-direction detecting unit 13 detects, from the posture, a state of the head, the iris, and the like of the user A, a direction that the user A is looking, i.e., a direction that the head and the eyes of the user face. Consequently, the visual-line-direction detecting unit 13 specifies an external factor affecting the visual sense of the user A, i.e., how the user A feels comfortableness of illumination light. The visual-line-direction detecting unit 13 specifies, for example, the direction of a wall surface present ahead in the visual line direction of the user.

Like the posture-direction detecting unit 12, the visual-line-direction detecting unit 13 may be arranged on the ceiling surface or may be arranged in an arbitrary place as long as the visual-line-direction detecting unit 13 can detect the visual line direction of the user A such as on the floor surface and on the desk. The visual-line-direction detecting unit 13 is, for example, an infrared sensor or a motion sensor.

The posture direction and the visual line direction detected by the posture-direction detecting unit 12 and the visual-line-direction detecting unit 13 are sent to the surface determining unit 14. The surface determining unit 14 determines, on the basis of the posture direction and the visual line direction, an object plane set as a detection target by the brightness detecting unit 11. For example, a region having a predetermined spread centering on a range where the posture direction and the visual line direction overlap each other can be set as an object plane. An angle formed by a straight line extending along the posture direction and a straight line extending along the visual line direction is equally divided into two, a segment passing an intersection of the straight lines is drawn, and a circle having a radius of 1 meter centering on a point where the segment and the wall surface cross is formed. The circle can be set as the object plane. The size of the object plane and a method of setting the object plane are not specifically limited.

After determining the object plane, the surface determining unit 14 sends position information of the object plane to the brightness detecting unit 11. The brightness detecting unit 11 specifies the object plane on the basis of the received position information and detects average brightness of the object plane. The detected average brightness is sent to the control unit 20A.

Lighting control processing for the lighting unit 30A by the control unit 20A is the same as the lighting control processing in the first embodiment. Information stored in the storing unit 40A is the same as the information in the first embodiment. However, the storing unit 40A may store a different control pattern for each position of the object plane. The control unit 20A may be configured to apply a different pattern every time the object plane is changed. The control unit 20A may be configured to apply a common control pattern irrespective of presence or absence of a change of the object plane.

For example, the wall surface W shown in FIG. 1 is equally divided into a predetermined number of sections. A different control pattern shown in FIG. 3B is prepared and stored for each of the sections. Lighting control is performed using the control pattern stored in association with the section including the object plane. If an appearance for the user and a light reflection state are different for each object plane, by setting a different control pattern for each position of the object plane, it is possible to further improve comfortableness for the user. Note that, in generating a control pattern, target illuminance only has to be set on the basis of the experiment explained above.

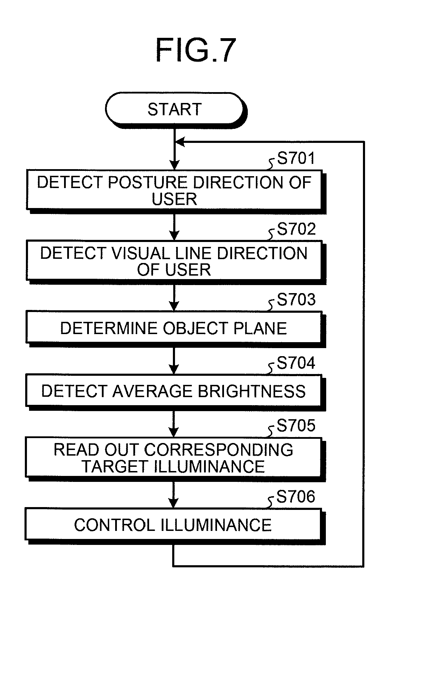

FIG. 7 is a flowchart for explaining an example of a flow of the lighting control processing in the lighting system 1A according to the modification of the first embodiment. The example of the flow of the lighting control processing in the lighting system 1A according to the modification of the first embodiment is explained with reference to FIG. 7.

First, when the lighting control processing is started, the posture-direction detecting unit 12 detects the posture direction of the user A (Act 701). Subsequently, the visual-line-direction detecting unit 13 detects the visual line direction of the user A (Act 702). The detected posture direction and the detected visual line direction are sent to the surface determining unit 14. The surface determining unit 14 determines an object plane on the basis of the posture direction and the visual line direction (Act 703). The surface determining unit 14 sends position information of the determined object plane to the brightness detecting unit 11. After specifying the object plane on the basis of the position information, the brightness detecting unit 11 detects average brightness of the object plane (Act 704). The brightness detecting unit 11 sends the average brightness to the control unit 20A. The control unit 20A reads out target illuminance stored in association with the average brightness from the storing unit 40A (Act 705). The control unit 20A controls the lighting unit 30A to emit light to attain the read-out target illuminance (Act 706). The lighting control processing according to the modification of the first embodiment ends.

Like the processing shown in FIG. 5 according to the first embodiment, the processing shown in FIG. 7 is shown as a loop. However, as in the first embodiment, the lighting control may be executed at every predetermined time and may be executed according to a trigger input of the user.

In the modification of the first embodiment, both of the posture direction and the visual line direction are detected and the object plane is determined on the basis of both of the posture direction and the visual line direction. However, the determination of the object plane is not limited to this. Only one of the posture-direction detecting unit 12 and the visual-line-direction detecting unit 13 may be provided and the object plane may be determined on the basis of one of the posture direction and the visual line direction.

As explained above, the lighting system according to the modification of the first embodiment further includes the posture-direction detecting unit (the second detecting unit) configured to detect the posture direction of the user. The first detecting unit detects the brightness of a different object plane according to a change in the posture direction detected by the posture-direction detecting unit. Therefore, it is possible to execute, accurately reflecting the posture direction of the user, the control of the lighting unit to attain illuminance that the user visually feels comfortable. Therefore, it is possible to further improve comfortableness given to the user by lighting.

The lighting system according to the modification of the first embodiment further includes the visual-line-direction detecting unit (the third detecting unit) configured to detect the visual line direction of the user. The first detecting unit detects the brightness of a different object plane according to a change in the visual line direction detected by the visual-line-direction detecting unit. Therefore, it is possible to execute, accurately reflecting the visual line direction of the user, the control of the lighting unit to attain illuminance that the user visually feels comfortable. Therefore, it is possible to further improve comfortableness given to the user by lighting.

The object plane is continuously reset to detect brightness according to changes in the posture direction and the visual line direction of the user. Therefore, it is possible to dynamically change illuminance and realize finer lighting control.

Note that, in the first embodiment and the modification of the first embodiment, one illuminance is stored in association with the brightness detected by the detecting unit. However, illuminances of a plurality of positions may be stored in association with one brightness to control a plurality of the lighting units.

In the first embodiment, the illuminance of the work plane is set according to the average brightness of the object plane detected by the detecting unit. On the other hand, in a second embodiment, a plurality of lighting units are provided and a plurality of detecting units are provided between a window side and a room deep part side in a room to detect illuminances in a plurality of positions having different distances from a window surface. An illuminance curve representing the illuminances in the positions from the window side to the room deep part side is generated. Target illuminances of the plurality of lighting units are set on the basis of the generated illuminance curve. At this point, an amount of illuminance by daylight is calculated by subtracting illuminance by illumination light of the lighting unit from the detected illuminance. The target illuminances of the plurality of lighting units are adjusted according to the daylight amount. Details of a lighting system according to the second embodiment are explained below.

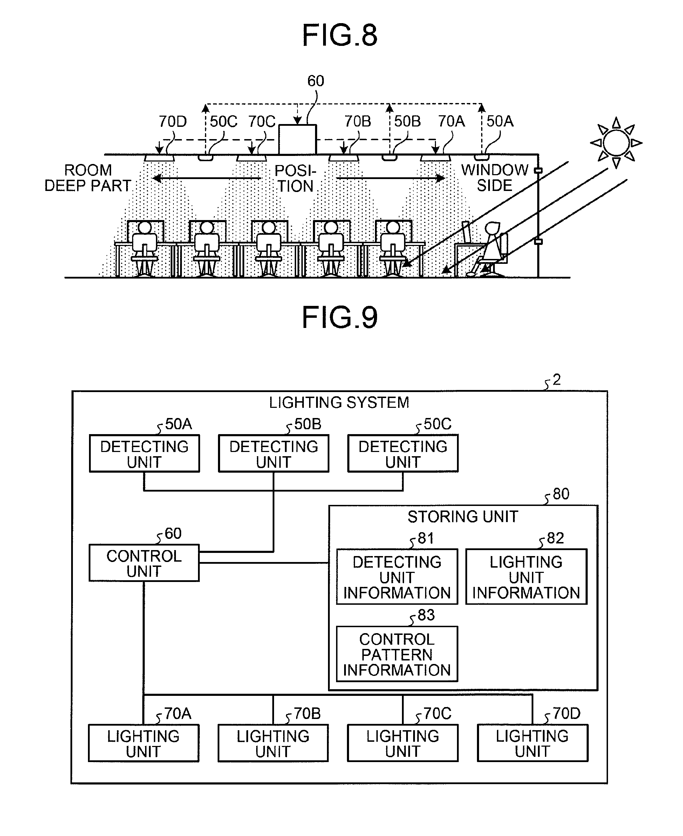

FIG. 8 is a schematic diagram showing an overall configuration of a lighting system 2 according to the second embodiment. FIG. 9 is a diagram showing the example of the configuration of the lighting system 2 according to the second embodiment. As shown in FIGS. 8 and 9, the lighting system 2 according to the second embodiment includes a plurality of detecting units 50A to 50C, a control unit 60, and a plurality of lighting units 70A to 70D. Note that the number of detecting units and the number of lighting units shown in the figures are only an example. Three or more detecting units and four or more lighting units may be provided. Although not shown in FIG. 8, the lighting system 2 further includes a storing unit 80 (see FIG. 9). In the storing unit 80, detecting unit information 81, lighting unit information 82, and control pattern information 83 are stored (FIG. 9).

As shown in FIG. 8, the lighting system 2 according to the second embodiment is useful in an environment in which brightness in a room is affected by light made incident from a window surface. When the illuminance of indoor light is adjusted, the adjustment is generally performed to attain fixed illuminance irrespective of a room deep part or a window side. However, actually, a user sitting on the window side adapts to the light made incident from the window surface, if a user in the room deep part and a user on the window side are irradiated with light having the same illuminance, the user on the window side sometimes feels the light dark even if the user in the room deep part feels the light comfortable. In the environment in which the users are affected by the light made incident from the window surface in this way, it is desirable from the viewpoint of realizing a lighting environment comfortable for the users to change a target illuminance level on the window side and in the room deep part.

Therefore, in the second embodiment, a plurality of detecting units 50A to 50C are set in places at different distances from the window surface between the window side and the room deep part. In the example shown in FIG. 8, the detecting unit 50A is arranged in a position closest to the window surface and the detecting unit 50C is arranged in a position in the room deepest part. The detecting units 50A to 50C respectively detect illuminances in the vicinities thereof. Information concerning the detected illuminances is sent to the control unit 60. Like the detecting unit 10 in the first embodiment, the detecting units 50A to 50C are configured by illuminance sensors and the like. Note that, in the example shown in FIG. 8, the detecting units 50A to 50C are arranged in a plurality of positions at different distances from the window surface. However, arrangement positions of the detecting units are not limited to the positions shown in the figure. The detecting units may be arranged in arbitrary positions as long as illuminances from the window surface to the room deep part can be detected for each of the distances from the window surface.

The control unit 60 receives the information concerning the illuminances in the respective positions from the plurality of detecting units 50A to 50C and generates, on the basis of the received information concerning the illuminances, a first illuminance curve representing changes in the illuminances from the window side to the room deep part. Illuminances attained by lighting operations of the lighting units 70A to 70D are stored in the storing unit 80 in advance. A curve representing illuminances attained by the daylight is also generated by subtracting the illuminances from the generated first illuminance curve. Further, a second illuminance curve representing target illuminances, which the lighting sections are caused to attain, is generated from the first illuminance curve based on the detected information. Details of the illuminance curves are explained below.

The lighting units 70A to 70D are respectively arranged in a plurality of positions at different distances from the window surface between the window side and the room deep part. In the example shown in FIG. 8, the lighting unit 70A is arranged in a position closest to the window surface and the lighting unit 70D is arranged in a position in a room deepest part. Note that, in the example shown in FIG. 8, the lighting units 70A to 70D are respectively arranged in the positions at the different distances from the window surface. However, arrangement positions of the lighting units are not limited to the positions shown in the figure. The lighting units may be arranged in arbitrary positions as long as the illuminance from the window surface to the room deep part can be adjusted to be changed. The lighting units 70A to 70D can be realized using arbitrary luminaires such as incandescent lamps, fluorescent lamps, or LED lamps.

As explained above, in the lighting system 2, the information concerning the illuminances detected by the plurality of detecting units 50A to 50C is sent to the control unit 60. The control unit 60 generates an illuminance curve referring to the information concerning the units stored in the storing unit 80. The control unit 60 determines target illuminances, which the lighting units 70A to 70D should attain, taking into account the influence of the daylight and controls the lighting unit 70A to 70D to attain the target illuminances.

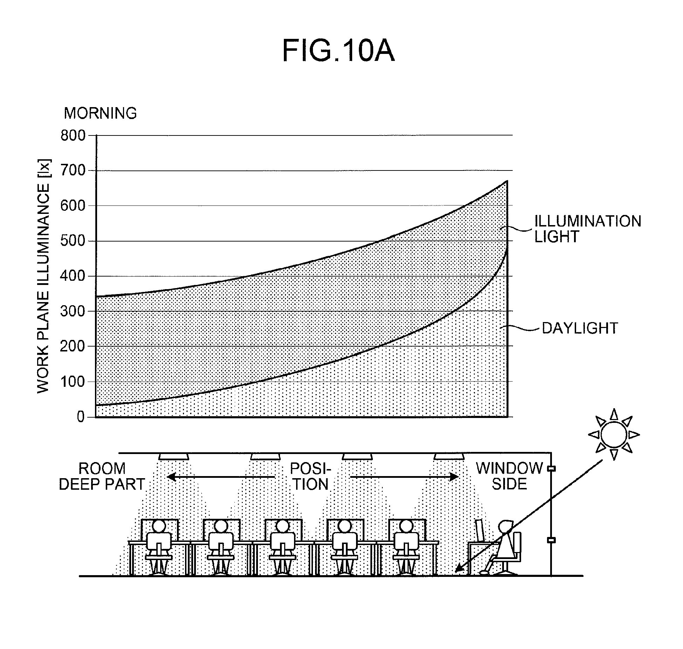

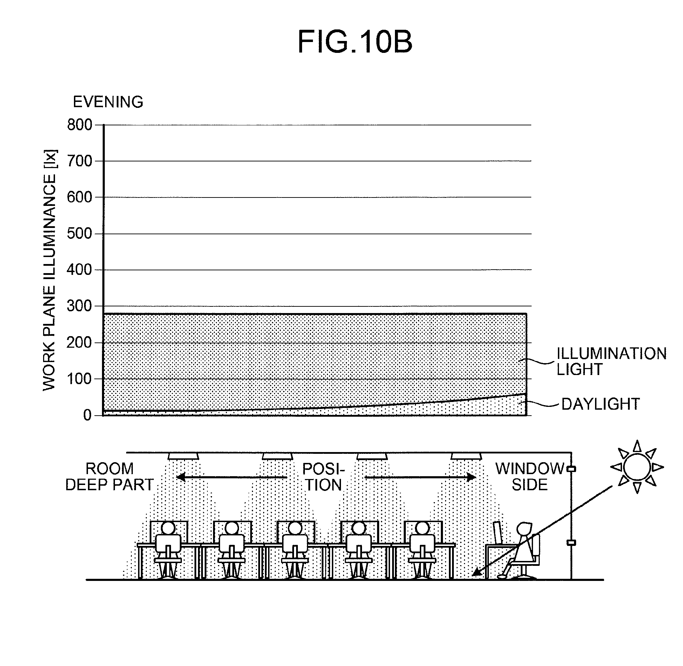

Processing for generating an illuminance curve by the control unit 60 is explained with reference to FIGS. 10A and 10B. FIGS. 10A and 10B are diagrams for explaining lighting control in the lighting system 2 according to the second embodiment. FIG. 10A shows an example of illuminance distribution control in the room in the morning. FIG. 10B shows an example of illuminance distribution control in the room in the evening. Graphs shown in FIGS. 10A and 10B generally correspond to the second illuminance curve.

As shown in a lower part of FIG. 10A, in the morning, the sunlight is intense and the influence of the sunlight made incident in the room is large. As a result, if an amount of illumination light is controlled to be fixed from the morning to the evening, illuminance is high on the window side and illuminance is low in the room deep part. Whereas, on the window side, the influence of the sunlight (the daylight) is large and a ratio of illuminance by the sunlight is large, on the other hand, in the room deep part, the influence of the sunlight is small and a ratio of illuminance by the sunlight is small.

On the other hand, as shown in a lower part of FIG. 10B, in the evening, the sunlight weakens and the influence of the sunlight made incident in the room decreases. As a result, if an amount of illumination light is controlled to be fixed from the morning to the evening, there is almost no difference in illuminance between the window side and the room deep part. Although a ratio of illuminance by the sunlight is slightly large on the window side compared with the room deep part, it may be considered that there is almost no difference between the window side and the room deep part compared with the morning.

In the case of the example in the morning shown in FIG. 10A, the user on the window side is affected by the external light and gets used to brightness by the external light. As a result, if combined illuminance of the illumination light and the daylight is adjusted to be the same illuminance as the room deep part, the user feels light dark. Therefore, in the second embodiment, illuminance attained by combining the daylight and the illumination light is adjusted to be higher on the window side than the room deep part.

Specifically, first, an area affected by the daylight is represented by a distance "x" from the window surface. If the distance "x" from the window surface is smaller than a constant "a" ("a" is a natural number equal to or larger than 1) (x<a), target illuminance is set such that illuminance from the window surface to a point of the distance x=a gradually decreases, for example, decreases in a linear fashion. For example, if the illuminance of a work plane is represented as y, the target illuminance is set such that y=-bx+c ("b" and "c" are constants of natural numbers equal to or larger than 1). Concerning a point where the distance "x" from the window surface is equal to or larger than the constant "a" (x≥a), the target illuminance is set such that the illuminance "y" of the work plane=d ("d" is a constant of a natural number equal to or lager than 1). That is, the target illuminance is set such that the illuminance gradually decreases from the window side to the point of "a" and the illuminance is fixed at a point of a distance equal to or larger than "a". In the following explanation, a control pattern for controlling the illuminance to be gradually reduced in a predetermined distance from the window surface to the room deep part and controlling the illuminance to be fixed on the room deeper part side than the predetermined distance is referred to as first pattern. In the first pattern, control based on the following Expression (1) is performed:

$$y=-bx+c \ (x<a)$$

$$y=d \ (x \geq a) \qquad\qquad (1)$$

In the case of the example in the evening shown in FIG. 10B, although the user on the window side is slightly affected by the external light, it may be considered that there is almost no influence. Therefore, even if the combined illuminance of the illumination light and the daylight is adjusted to be the same illuminance as the room deep part, the user does not specifically feel a sense of discomfort. Therefore, in the case of an illuminance distribution in which a difference of the influence of the external light is small between the room deep part and the window side, for example, in the evening, as shown in FIG. 10B, illuminance is controlled to fix the target illuminance without specifically changing the target illuminance from the room deep part to the window surface. In the following explanation, a control pattern for controlling the target illuminance to be substantially fixed from the room deep part to the window surface is referred to as second pattern.

The control unit 60 calculates illuminance attained by the daylight on the basis of illuminances detected by the detecting units 50A to 50C and determines, on the basis of the calculated illuminance, whether an illuminance pattern is an illuminance pattern in the morning or an illuminance pattern in the evening. The illuminance pattern in the morning is a pattern in which a large illuminance difference is caused between the window side and the room deep part side by the illuminance of the daylight. On the other hand, the illuminance pattern in the evening is a pattern in which illuminance attained by the daylight is small and a large illuminance difference does not occur between the window side and the room deep part side.

The control unit 60 calculates the illuminance of the daylight to determine which of the first pattern and the second pattern should be applied. The control unit 60 specifies a point where the illuminance attained by the daylight is lower than a predetermined threshold TH and sets a distance from the window surface to the point as "a" in the above expression. The control unit 60 determines the constants "b" and "c" according to the magnitude of set "a". That is, the control unit 60 calculates illuminance "d" that the user feels comfortable at the point at the distance "a" from the window surface and determines the constants "b" and "c" to gradually reduce illuminance from the window surface to reach the calculated illuminance. In this way, values of the constants "a", "b", "c", and "d" are adjusted as appropriate according to a position affected by the daylight. For example, the following Expression (2) can be used as a calculation formula:

$$y = -77x + 843 \ (x < 6)$$

$$y = 380 \ (x \geq 6) \qquad (2)$$

By performing the processing as explained above, it is possible to change a gradient and a value of an illuminance curve of the target illuminance between the case in which even the deep part of the room in which the lighting system 2 is set is greatly affected by the daylight and the case in which the influence of the daylight is limited to the window side and set appropriate target illuminance according to a situation. It is possible to change the applied control pattern (the first pattern or the second pattern) between the case in which the illuminance in the room is fixed as a whole and the case in which the illuminance in the room greatly fluctuates from the window side to the room deep part side and realize control by a pattern that matches a lighting situation at that point.

The control unit 60 may set the constants "a", "b", "c", and "d" to increase the gradient of the illuminance curve as the illuminance in the vicinity of the window surface is higher and reduce the gradient of the illuminance curve as the illuminance in the vicinity of the window surface is lower.

The control unit 60 may control the gradient of the illuminance curve to fluctuate according to a period of time. A plurality of illuminance curves may be stored in the storing unit 80 in association with incident angles of the sunlight, times, seasons, weathers, and the like. The control unit 60 may be configured to detect an incident angle of the sunlight, time, season, weather, and the like and select an illuminance curve according to a detection result.

As explained above, in the second embodiment, the control unit generates, on the basis of illuminances detected by the plurality of detecting units, an illuminance curve for specifying a relation between target illuminances applied to the plurality of lighting units and distances from the window surface. The control unit controls the plurality of lighting units on the basis of the illuminance curve. As the illuminance curve generated by the control unit, there are a first illuminance curve for reflecting a detection result and a second illuminance curve for specifying target illuminance.

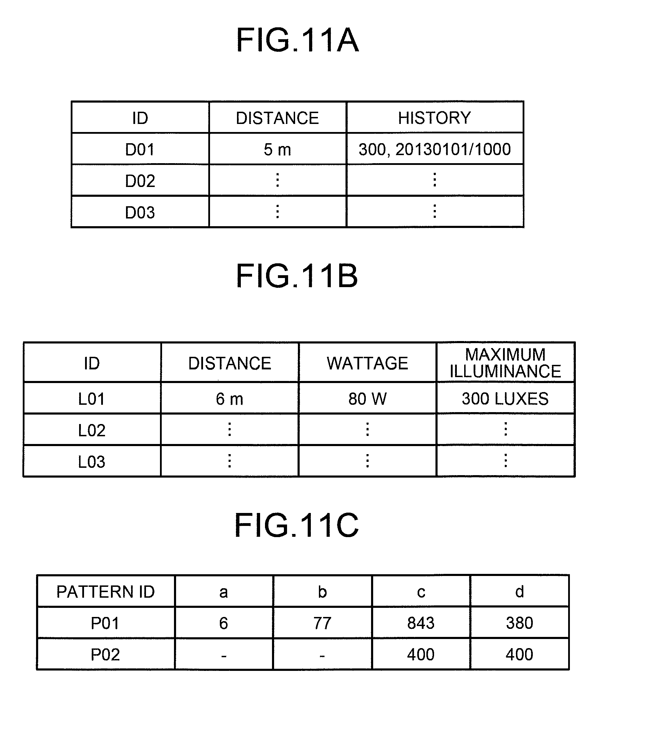

Information stored in the storing unit 80 is explained with reference to FIGS. 11A to 11C. FIG. 11A is a diagram showing an example of the configuration of the detecting unit information 81 stored in the storing unit 80 of the lighting system 2 according to the second embodiment. FIG. 11B is a diagram showing an example of the configuration of the lighting unit information 82 stored in the storing unit 80 of the lighting system 2 according to the second embodiment. FIG. 11C is a diagram showing an example of the configuration of the control pattern information 83 stored in the storing unit 80 of the lighting system 2 according to the second embodiment.

As shown in FIG. 11A, the storing unit 80 stores information concerning the detecting units 50A to 50C included in the lighting system 2. For example, the storing unit 80 stores, in association with identifiers (IDs) for uniquely identifying the detecting units 50A to 50C, distances between positions where the detecting units are arranged and the window surface and information concerning illuminances previously detected. In the example shown in FIG. 11A, a distance "5 m", information concerning detected illuminance "300, 20130101/1000", and the like are stored in association with an ID "D01". This indicates that the detecting unit identified by the ID "D01" is arranged in a position of 5 meters from the window surface and illuminance detected at 10 o'clock, January 1, 2013 is 300 luxes.

As shown in FIG. 11B, the storing unit 80 stores information concerning the lighting units 70A to 70D included in the lighting system 2. For example, the storing unit 80 stores, in association with identifiers for uniquely identifying the lighting units 70A to 70D, information such as distances between positions where the lighting units are arranged and the window surface, wattages of the lighting units, and maximum illuminances. In the example shown in FIG. 11B, a distance "6 m", a wattage "80 W", maximum illuminance "300 luxes", and the like are stored in association with an ID "L01". This indicates that the lighting unit identified by the ID "L01" is arranged in a position of 6 meters from the window surface and has the wattage of 80 W and the maximum illuminance of 300 luxes.

Note that, if the detecting units and the lighting units are added or changed later, the information of the storing unit 80 is added or changed every time the detecting units and the lighting units are added or changed.

As shown in FIG. 11C, the storing unit 80 stores information concerning control patterns in the lighting system 2. For example, as explained above, if the control based on Expression (1) is performed, values of the constants are stored in association with IDs for uniquely identifying the control patterns. For example, in the example shown in FIG. 11C, a "6", b "77", c "843", and d "380" are stored in association with a pattern ID "P01". This indicates that the control indicated by Expression (2) is performed in a control pattern having the pattern ID "P01". In FIG. 11C, a control pattern having a pattern ID "P02" indicates that illuminance is controlled to fixed illuminance "400 luxes" irrespective of a position from the window surface.

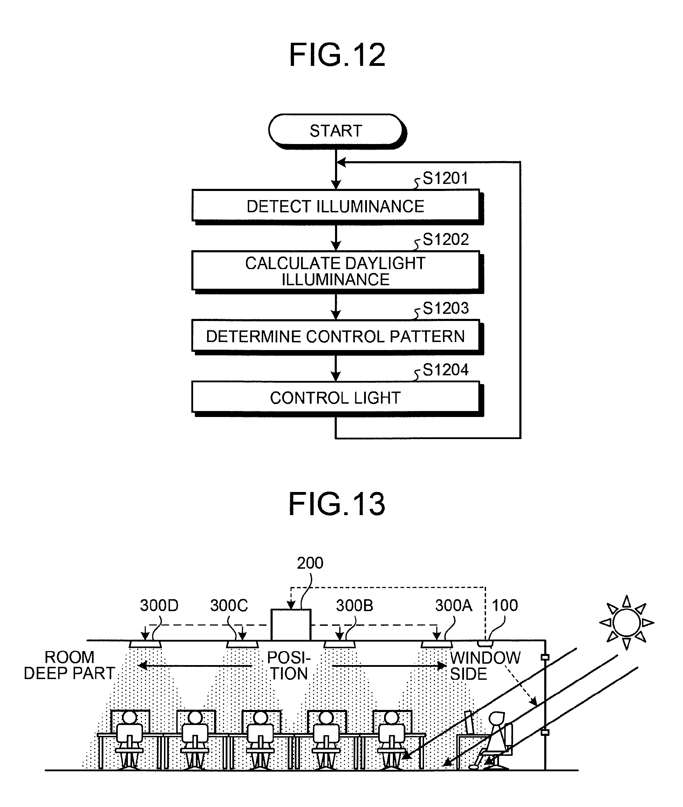

A flow of lighting control processing in the second embodiment is explained with reference to FIG. 12. FIG. 12 is a flowchart for explaining an example of the flow of the lighting control processing in the lighting system 2 according to the second embodiment.

As shown in FIG. 12, first, the detecting units 50A to 50C detect illuminances in positions (Act 1201). The detecting units 50A to 50C transmit information concerning the detected illuminances to the control unit 60. The control unit 60 subtracts illuminances attained by lighting operations of the lighting units 70A to 70D from the detected illuminances and calculates daylight illuminance (Act 1202). The control unit 60 determines, on the basis of the daylight illuminance and an illuminance curve, a control pattern to be applied (Act 1203). The control unit 60 controls the lighting units 70A to 70D on the basis of the determined control pattern (Act 1204).

As explained above, the lighting system 2 according to the second embodiment includes the plurality of lighting units 70A to 70D arranged in the plurality of positions at the different distances from the window surface, the plurality of detecting units 50A to 50C configured to detect illuminances in the plurality of positions at the different distances from the window surface, and the control unit 60 configured to determine, on the basis of the illuminances detected by the plurality of detecting units, an illuminance curve for specifying a relation between target illuminances applied to the plurality of lighting units and distances from the window surface and control the plurality of lighting units on the basis of the illuminance curve. Therefore, it is possible to control the illuminances of the lighting units according to the distances from the window surface and execute lighting control taking into account the influence of the daylight made incident from the window surface. Therefore, it is possible to realize a lighting environment more comfortable for the user.

The control unit 60 included in the lighting system 2 according to the second embodiment increases the gradient of the illuminance curve as the illuminance in the vicinity of the window surface is higher and reduces the gradient of the illuminance curve as the illuminance in the vicinity of the window surface is lower. Therefore, it is possible to determine a control curve applied to the lighting control appropriately taking into account a daylight amount that affects the brightness in the room. Therefore, it is possible to execute the lighting control appropriately taking into account the influence of the daylight.

The control unit 60 included in the lighting system 2 according to the second embodiment causes the gradient of the illuminance curve (the second illuminance curve) according to a period of time. Therefore, it is possible to determine the illuminance curve (the second illuminance curve, i.e., the control pattern) appropriately taking into account a state of the daylight that changes according to a period of time.

The lighting system 2 according to the second embodiment may further include a storing unit configured to store a plurality of illuminance curves in association with at least one of incident angles of the sunlight, times, seasons, and weathers and a second detecting unit configured to detect at least one of an incident angle of the sunlight, time, season, and weather. In this case, the control unit determines one of the illuminance curves stored in the storing unit according to at least one of the incident angle of the sunlight, the time, the season, and the weather detected by the second detecting unit. Therefore, it is possible to execute the lighting control accurately taking into account a state of the daylight that changes according to an incident angle of the sunlight, time, season, weather, and the like.

In the second embodiment, the detecting units are arranged in the plurality of places in the room. The first and second illuminance curves indicating detected illuminances and target illuminances from the window side to the room deep part side are generated. In a third embodiment, a detecting unit configured to detect the brightness of the window surface is arranged. A control pattern, i.e., an illuminance curve applied to lighting control is determined on the basis of the detected brightness of the window surface. Details of a lighting system 3 according to the third embodiment are explained below.

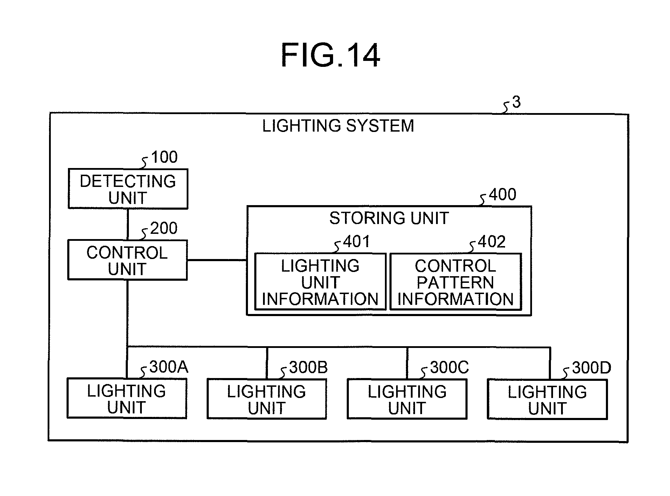

FIG. 13 is a schematic diagram showing an overall configuration of the lighting system 3 according to the third embodiment. FIG. 14 is a diagram showing an example of the configuration of the lighting system 3 according to the third embodiment. As shown in FIGS. 13 and 14, the lighting system 3 according to the third embodiment includes a detecting unit 100, a control unit 200, a plurality of lighting units 300A to 300D, and a storing unit 400. Note that the number of lighting units shown in the figure is only an example. Three or more lighting units may be provided. In the storing unit 400, lighting unit information 401, control pattern information 402, and the like are stored.

As shown in FIG. 13, the lighting system 3 according to the third embodiment detects the brightness of light made incident from the window surface, determines a control pattern according to the detected brightness, and executes the lighting control on the basis of the determined control pattern. The third embodiment is different from the second embodiment in that the plurality of detecting units are not provided and a control pattern that should be applied is determined on the basis of the brightness of the window surface.

The detecting unit 100 is, for example, a brightness sensor. The detecting unit 100 is arranged in the vicinity of the window surface and detects the brightness of the window surface. Note that a function of detecting the direction of incident light other than the brightness of the window surface may be provided in the detecting unit 100.

The control unit 200 receives information concerning the brightness detected by the detecting unit 100 and determines, on the basis of the magnitude of the brightness, a control pattern to be applied. Specifically, the control unit 200 selects a control pattern associated with the detected brightness among a plurality of control patterns stored in the storing unit 400 and executes the lighting control on the basis of the selected control pattern. The control patterns stored in the storing unit 400 are explained below.

The lighting units 300A to 300D are luminaires arranged in sections in the room. In the example shown in FIG. 13, the lighting units 300A to 300D are arranged in a plurality of positions at different distances from the window surface. In the example shown in FIG. 13, the lighting unit 300A is arranged closest to the window surface and the lighting unit 300D is arranged in a position in the room deepest part. Note that arrangement positions of the lighting units are not limited to the arrangement positions shown in the figure. The lighting units can be arranged in arbitrary positions as long as desired illuminances can be attained in the sections in the room.

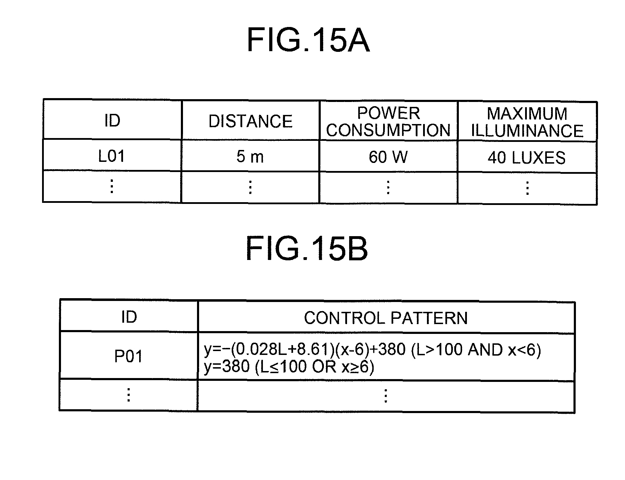

The storing unit 400 stores the lighting unit information 401 and the control pattern information 402. The information stored in the storing unit 400 is explained with reference to FIGS. 15A and 15B. FIG. 15A is a diagram showing an example of the configuration of the lighting unit information 401 stored in the storing unit 400 of the lighting system 3 according to the third embodiment. FIG. 15B is a diagram showing an example of the configuration of the control pattern information 402 stored in the storing unit 400 of the lighting system 3 according to the third embodiment.

As shown in FIG. 15A, the storing unit 400 stores information concerning the lighting units 300A to 300D. For example, the storing unit 400 stores IDs for uniquely identifying the lighting units, distances from the window surface to the lighting units, power consumption, maximum illuminances, and the like. The configuration of the lighting unit information 401 is the same as the lighting unit information shown in FIG. 11B.

As shown in FIG. 15B, the storing unit 400 stores information concerning control patterns to be selected by the control unit 200. In the example shown in FIG. 15B, in a control pattern identified by an ID "P01", the control unit 200 executes control on the basis of the following Expression (3):

$$y = -(0.028L + 8.61)(x-6) + 380 \ (L > 100 \text{ and } x < 6)$$

$$y = 380 \ (L \leq 100 \text{ or } x \geq 6) \qquad (3)$$

In Expression (3), "y" represents the illuminance of a work plane, L represents the brightness of the window surface, and "x" represents a distance from the window surface. Concerning a work plane present in a place where average brightness of the window surface is larger than 100 candela/$m^2$ and a distance from the window surface is smaller than 6 m, the control unit 200 executes control such that illuminance is $-(0.028L + 8.61)(x-6) + 380$ luxes. On the other hand, concerning a work plane present in a place where average brightness of the window surface is equal to or smaller than 100 candela/$m^2$ or a distance from the window surface is equal to or larger than 6 m, the control unit 200 executes control such that illuminance is 380 luxes.

As explained above, if the window surface average brightness is high, the illuminance of the work plane on the window side is controlled to be high and the illuminance is controlled to be reduced at a higher rate of change further away from the window surface. If the window surface average brightness is low, the illuminance is controlled to be the same both on the window side and in the room deep part. Concerning a position far from the window surface, the illuminance is controlled to be fixed illuminance irrespective of window surface brightness. Consequently, it is possible to change the illuminance of the work plane taking into account window surface brightness and taking into account a distance from the window surface. Further, it is possible to change, according to the window brightness, a rate of change of the illuminance of the work plane corresponding to a place.

In FIG. 15B, the control method indicated by the Expression (3) is stored as the control pattern identified by the control pattern ID "P01". A storage form of control patterns is not specifically limited. As in the example shown in FIG. 11C, numerical expressions applied to control and constant values substituted in the numerical expressions may be stored.

As explained above, in the third embodiment, if the brightness of the window surface is larger than a fixed value and a distance from the window surface is smaller than a fixed value, the illuminance of the work plane is changed according to the distance from the window surface. A rate of change of target illuminance is changed according to the brightness of the window surface. On the other hand, if the brightness of the window surface is equal to or smaller than the fixed value or the distance from the window surface is equal to or larger than the fixed value, the illuminance of the work plane is controlled to be fixed. If the brightness of the window surface is larger than the fixed value and the distance between the window surface and the work plane is smaller than the fixed value, the illuminance of the work plane can be controlled to change according to the distance from the window surface and the rate of change of illuminance corresponding to the distance can be controlled to fluctuate according to the brightness of the window surface.

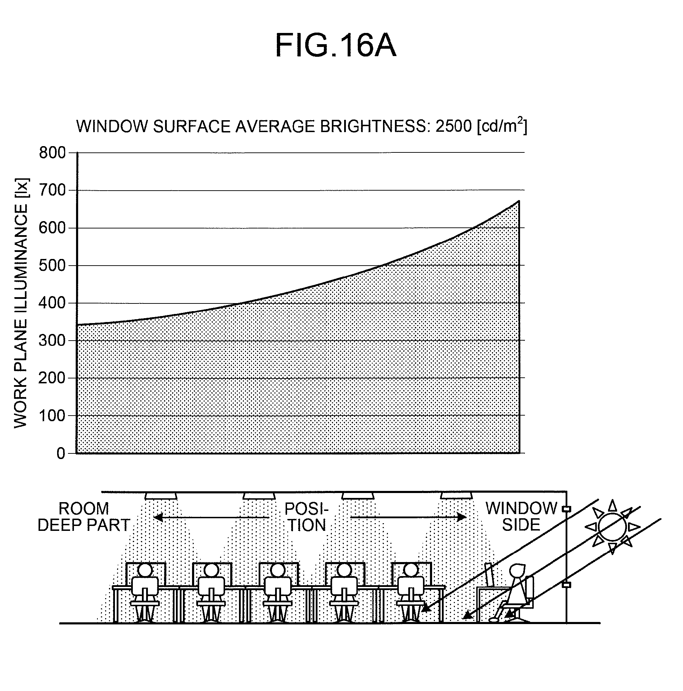

A relation between the brightness of the window surface and the illuminance of the work plane is explained with reference to FIGS. 16A to 16C. FIGS. 16A to 16C are diagrams for explaining the lighting control in the lighting system 3 according to the third embodiment. FIG. 16A shows control contents for the work plane performed if the average brightness of the window surface is 2500 candela/m$^2$. In this case, since a user on the window side adapts to high brightness, the user feels lighting unnatural unless the work plane is irradiated at high illuminance to some extent. On the other hand, since a user in the room deep part is hardly affected by the external light made incident from the window surface, the user has a sense of discomfort if the work plane is irradiated at excessively high illuminance. Therefore, target illuminance for increasing the illuminance on the window side and reducing the illuminance in the room deep part is set and the lighting control is executed.

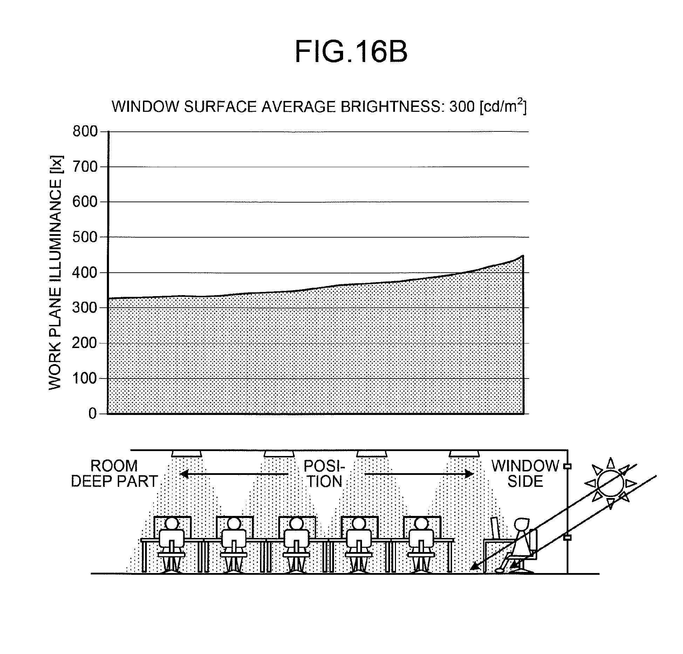

FIG. 16B shows control contents for the work plane performed if the average brightness of the window surface is 300 candela/m$^2$. In this case, the influence of the incident external light is not as large as the influence in the example shown in FIG. 16A. However, since the user on the window side is lightly affected by the external light, the user on the window side has a sense of discomfort if the work plane is controlled to the same illuminance as the illuminance of the room deep part. Therefore, in the case of the example shown in FIG. 16B, after the gradient of an illuminance curve is set gentler than an illuminance curve in FIG. 16A, target illuminance for slightly increasing the illuminance on the window side and slightly reducing the illuminance in the room deep part is set and the lighting control is executed.

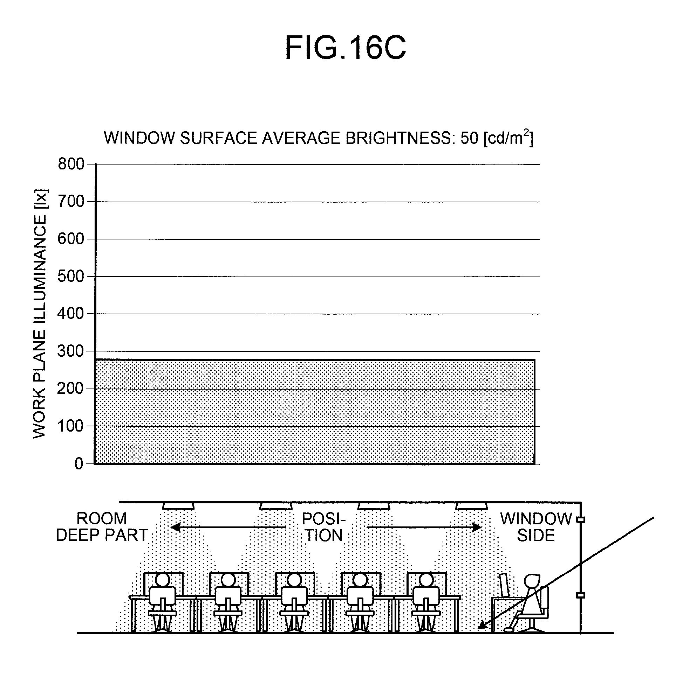

FIG. 16C shows control contents for the work plane performed if the average brightness of the window surface is 50 candela/m$^2$. In this case, there is substantially no influence of the incident external light. Therefore, both the user on the window side and the user in the room deep part do not have a sense of discomfort even if the work planes are controlled to be the same illuminance. Therefore, in the case of FIG. 16C, target illuminances are set to the same illuminance both in the room deep part and on the window side and the lighting control is executed.

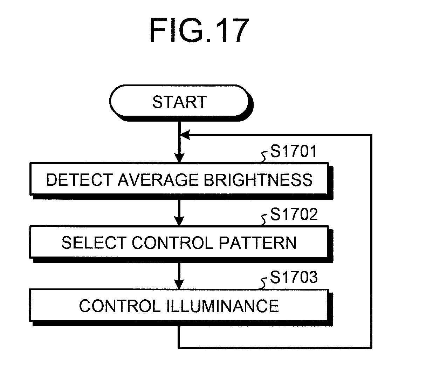

An example of a flow of lighting control processing in the third embodiment is explained with reference to FIG. 17. FIG. 17 is a flowchart for explaining the example of the flow of the lighting control processing in the lighting system 3 according to the third embodiment.

First, the detecting unit 100 detects average brightness of the window surface (Act 1701). The control unit 200 selects, from the control pattern information 402 of the storing unit 400, a control pattern corresponding to the average brightness detected by the detecting unit 100 (Act 1702). The control unit 200 controls illuminances of the lighting units 300A to 300D on the basis of the selected control pattern (Act 1703). Consequently, the lighting control processing ends.

Note that, in the third embodiment, in order to change the gradient of the illuminance curve according to a period of time, a function of detecting time may be imparted to the detecting unit 100 shown in FIG. 14. A constant value of a numerical expression adopted as a control pattern may be caused to fluctuate according to time detected by the detecting unit 100. For example, if illuminance is controlled on the basis of the Expression (1), values of the constants "a" and "b" may be caused to fluctuate according to time.

Note that the lighting control processing may be continued to be executed while brightness is continuously detected or may be executed at every predetermined time. The processing may be started when the user performs trigger input to the lighting system 3.

Note that, in the third embodiment, the control pattern corresponding to the average brightness of the window surface is selected and the lighting control is executed. However, the lighting control is not limited to this. For example, the control unit 200 may be configured to subtract a contribution of illumination lights of the lighting units 300A to 300D from the average brightness detected by the detecting unit 100 and calculate a contribution by the daylight, for example, a ratio of the daylight to the average brightness. The control unit 200 may adjust target illuminances of the lighting units 300A to 300D according to the calculated contribution by the daylight. The control unit 200 only has to cause the storing unit 400 to store the previous control history and acquire the contribution by the illumination lights of the lighting units 300A to 300D by reading out the control history from the storing unit 400 as appropriate.

As explained above, in the lighting system 3 according to the third embodiment, the detecting unit detects the brightness of the window surface set in the room in which the lighting unit is arranged. According to a detection result, the control unit controls the illuminance of the work plane to change according to the distance from the window surface if the brightness of the window surface is larger than a first value and the distance between the window surface and the work plane is smaller than a second value and controls the illuminance of the work plane to be a fixed value if the brightness of the window surface is equal to or smaller than the first value or the distance between the window surface and the work plane is equal to or larger than the second value. Therefore, it is possible to set the illuminance of the work plane according to the brightness of the window surface and the distance from the window surface. It is possible to improve comfortableness of lighting for the user.

In the lighting system according to the third embodiment, the work plane illuminance can be changed according to the distance from the window surface. A rate of change of the illuminance corresponding to the distance can be changed according to the brightness of the window surface. Therefore, it is possible to change an illuminance gradient in the room according to the brightness of the window surface. It is possible to improve comfortableness of lighting for the user.

In the lighting system according to the third embodiment, if a detecting unit configured to detect window surface brightness is arranged, it is possible to realize control of the illuminance of the entire room. As in the second embodiment, if the illuminances of sections in the room are detected by the plurality of detecting units and target illuminance is determined on the basis of a detection result, it is possible to perform precise control. However, depending on the size of the room, the number of detecting units increases to a relatively large number and apparatus costs and labor and time for setting increase. On the other hand, in the third embodiment, the detecting unit configured to detect the brightness of the window surface is set and the lighting control for the room is realized on the basis of only information that can be detected on the window surface. Therefore, it is possible to reduce apparatus costs, labor and time for setting, and the like.

In the lighting system according to the third embodiment, it is possible to execute the lighting control using the same illuminance curve as the illuminance curve in the lighting system according to the second embodiment. For example, the control unit can control the lighting unit such that $y=-bx+c$ if $x<a$ and $y=d$ if $x \geq a$, where "x" represents a distance from the window surface to the lighting unit, "y" represents the illuminance of the work plane, and "a", "b", "c", and "d" are constants. Therefore, by preparing a simple numerical expression and determining several patterns of the constants in advance, it is possible to easily realize a lighting environment comfortable for the user even under different external light conditions.

In the lighting system according to the third embodiment, it is possible to impart a function of detecting time to the detecting unit and cause the constants of the numerical expression used for the control, for example, values of "a" and "b" of Expression (1) to fluctuate according to detected time. A plurality of the detecting units may be provided. One of the detecting units may be caused to detect window surface brightness and the other may be caused to detect time. Consequently, it is possible to select a control pattern with higher comfortableness according to time such as morning, noon, or night and provide a lighting environment comfortable for the user.

In the lighting system according to the third embodiment, a contribution of the daylight may be calculated by subtracting a contribution by the lighting unit from detected average brightness. Target illuminance of the lighting unit may be adjusted according to the calculated contribution. Consequently, it is possible to select appropriate target illuminance while taking into account a state of the previous lighting control. It is possible to further improve comfortableness of lighting for the user.

As explained above, the lighting system in the embodiment can improve comfortableness given to the user by lighting.

While certain embodiments have been described, these embodiments have been presented by way of example only, and are not intended to limit the scope of the inventions. Indeed, the novel methods and systems described herein may be embodied in a variety of other forms; furthermore, various omissions, substitutions and changes in the form of the methods and systems described herein may be made without departing from the spirit of the inventions. The accompanying claims and their equivalents are intended to cover such forms or modifications as would fall within the scope and spirit of the inventions.

**Claims**

1. A lighting system (1; 1A) comprising:

   a lighting unit (30; 30A) configured to light a work plane on which a user performs work;
   a first detecting unit (10; 11) configured to detect brightness of an object plane in a predetermined range present in a predetermined direction from the user; and
   a control unit (20; 20A) configured to control the lighting unit to emit illumination light having target illuminance corresponding to the brightness detected by the first detecting unit (10; 11).

2. The lighting system (1A) according to claim 1, further comprising a second detecting unit (12) configured to detect a posture direction of the user, wherein
the first detecting unit (11) detects brightness of a different object plane according to a change in the posture direction detected by the second detecting unit (12).

3. The lighting system (1A) according to claim 1 or 2, further comprising a third detecting unit (13) configured to detect a visual line direction of the user, wherein
the first detecting unit (11) detects brightness of a different object plane according to a change in the visual line direction detected by the third detecting unit (13).

4. The lighting system (1; 1A) according to claim 1, wherein the first detecting unit (10; 11) detects average brightness of a wall surface in a predetermined range ahead in a visual line direction of the user.

5. The lighting system (1; 1A) according to any one of claims 1 to 4, further comprising a storing unit (40; 40A) configured to store the brightness detected by the first detecting unit (10; 11) and the target illuminance of the lighting unit corresponding to the brightness in association with each other, wherein
the control unit (20; 20A) controls the lighting unit (30; 30A) to the target illuminance stored in the storing unit (40; 40A).

6. The lighting system (1; 1A) according to claim 5, wherein
the storing unit (40; 40A) stores, in association with the brightness detected by the first detecting unit (10; 11), target illuminances that should be attained at a plurality of points corresponding to distances from the object plane, and
the control unit (20; 20A) controls a plurality of the lighting units (30; 30A) to attain the target illuminances at the plurality of points.

7. The lighting system (3) according to claim 1, wherein the first detecting unit (100) detects brightness of a window surface set in a room in which the lighting unit (300A to 300D) is arranged.

8. The lighting system (3) according to claim 7, wherein the control unit (200) controls the lighting unit (300A to 300D) such that $y=-bx+c$ if $x<a$ and $y=d$ if $x\geq a$, where "x" represents a distance from the window surface to the lighting unit, "y" represents illuminance of the work plane, and "a", "b", "c", and "d" represent constants.

9. The lighting system (3) according to claim 8, further comprising a fourth detecting unit (100) configured to detect time, wherein
the control unit (200) causes values of the constants "a" and "b" to fluctuate according to the time detected by the fourth detecting unit (100).

10. The lighting system (3) according to claim 7, wherein the control unit (200) controls, if the brightness of the window surface detected by the first detecting unit (100) is larger than a first value and a distance between the window surface and the work plane is smaller than a second value, the illuminance of the work plane to change according to the distance from the window surface and controls, if the brightness of the window surface is equal to or smaller than the first value or the distance between the window surface and the work plane is equal to or larger than the second value, the illuminance of the work plane to be a fixed value.

11. The lighting system (3) according to claim 7, wherein the control unit (200) controls, if the brightness of the window surface detected by the first detecting unit (100) is larger than a first value and a distance between the window surface and the work plane is smaller than a second value, the illuminance of the work plane to change according to the distance from the window surface and controls a rate of the change to change according to the brightness of the window surface.

# FIG.1

# FIG.2

# FIG.3A

| LIGHTING ID | DISTANCE | POWER CONSUMPTION |
|---|---|---|
| 01 | 2 m | 60 W |
| ⋮ | ⋮ | ⋮ |

# FIG.3B

| PATTERN ID | AVERAGE BRIGHTNESS | DISTANCE | TARGET ILLUMINANCE |
|---|---|---|---|
| P01 | 150 cd/m$^2$ | 2 m | 500 LUXES |
| ⋮ | ⋮ | ⋮ | ⋮ |

# FIG.4

$y=107.3x^{0.325}$
$R=0.97$

WORK PLANE ILLUMINANCE AT WHICH USER CAN EASILY SEE PC SCREEN [lx]

AVERAGE BRIGHTNESS OF BACKGROUND REGION [cd/m²]

● 2.5 [m]
○ 6.0 [m]

# FIG.5

START

DETECT BRIGHTNESS — S501

READ OUT TARGET ILLUMINANCE — S502

CONTROL ILLUMINANCE — S503

# FIG.6

```
                                          ⌐1A
┌─────────────────────────────────────────────┐
│  LIGHTING SYSTEM                              │
│                                    ⌐10A       │
│   ┌───────────────────────────────────────┐  │
│   │  DETECTING UNIT                        │  │
│   │                          ⌐11          │  │
│   │   ┌─────────────────────────────┐     │  │
│   │   │  BRIGHTNESS                 │     │  │
│   │   │  DETECTING UNIT             │     │  │
│   │   └─────────────────────────────┘     │  │
│   │                          ⌐12          │  │
│   │   ┌─────────────────────────────┐     │  │
│   │   │  POSTURE-                   │     │  │
│   │   │  DIRECTION                  │     │  │
│   │   │  DETECTING UNIT             │     │  │
│   │   └─────────────────────────────┘     │  │
│   │                          ⌐13          │  │
│   │   ┌─────────────────────────────┐     │  │
│   │   │  VISUAL-LINE-               │     │  │
│   │   │  DIRECTION                  │     │  │
│   │   │  DETECTING UNIT             │     │  │
│   │   └─────────────────────────────┘     │  │
│   │                          ⌐14          │  │
│   │   ┌─────────────────────────────┐     │  │
│   │   │  SURFACE                    │     │  │
│   │   │  DETERMINING                │     │  │
│   │   │  UNIT                       │     │  │
│   │   └─────────────────────────────┘     │  │
│   └───────────────────────────────────────┘  │
│                                    ⌐20A       │
│   ┌───────────────────────────────────────┐  │
│   │  CONTROL UNIT                         │  │
│   └───────────────────────────────────────┘  │
│                                    ⌐30A       │
│   ┌───────────────────────────────────────┐  │
│   │  LIGHTING UNIT                        │  │
│   └───────────────────────────────────────┘  │
│                                    ⌐40A       │
│   ┌───────────────────────────────────────┐  │
│   │  STORING UNIT                         │  │
│   └───────────────────────────────────────┘  │
└─────────────────────────────────────────────┘
```

# FIG.7

```
        ┌──────────┐
        │  START   │◄──────────────┐
        └──────────┘               │
             │                     │
             ▼          ⌐S701      │
   ┌────────────────────────────┐ │
   │ DETECT POSTURE DIRECTION OF│ │
   │            USER            │ │
   └────────────────────────────┘ │
             │          ⌐S702      │
             ▼                     │
   ┌────────────────────────────┐ │
   │  DETECT VISUAL LINE DIRECTION│
   │          OF USER           │ │
   └────────────────────────────┘ │
             │          ⌐S703      │
             ▼                     │
   ┌────────────────────────────┐ │
   │   DETERMINE OBJECT PLANE    │ │
   └────────────────────────────┘ │
             │          ⌐S704      │
             ▼                     │
   ┌────────────────────────────┐ │
   │  DETECT AVERAGE BRIGHTNESS  │ │
   └────────────────────────────┘ │
             │          ⌐S705      │
             ▼                     │
   ┌────────────────────────────┐ │
   │   READ OUT CORRESPONDING    │ │
   │     TARGET ILLUMINANCE      │ │
   └────────────────────────────┘ │
             │          ⌐S706      │
             ▼                     │
   ┌────────────────────────────┐ │
   │     CONTROL ILLUMINANCE     │ │
   └────────────────────────────┘ │
             │                     │
             └─────────────────────┘
```

# FIG.8

# FIG.9

# FIG.10A

MORNING

Y-axis: WORK PLANE ILLUMINANCE [lx]
800
700
600
500
400
300
200
100
0

ILLUMINATION LIGHT

DAYLIGHT

ROOM DEEP PART

POSI-TION

WINDOW SIDE

# FIG.10B

# FIG.11A

| ID | DISTANCE | HISTORY |
|---|---|---|
| D01 | 5 m | 300, 20130101/1000 |
| D02 | ⋮ | ⋮ |
| D03 | ⋮ | ⋮ |

# FIG.11B

| ID | DISTANCE | WATTAGE | MAXIMUM ILLUMINANCE |
|---|---|---|---|
| L01 | 6 m | 80 W | 300 LUXES |
| L02 | ⋮ | ⋮ | ⋮ |
| L03 | ⋮ | ⋮ | ⋮ |

# FIG.11C

| PATTERN ID | a | b | c | d |
|---|---|---|---|---|
| P01 | 6 | 77 | 843 | 380 |
| P02 | - | - | 400 | 400 |

# FIG.12

```
                    START

                              ⌐S1201
              DETECT ILLUMINANCE

                              ⌐S1202
              CALCULATE DAYLIGHT
                  ILLUMINANCE

                              ⌐S1203
          DETERMINE CONTROL PATTERN

                              ⌐S1204
                CONTROL LIGHT
```

# FIG.13

# FIG.14

LIGHTING SYSTEM ⌇3

DETECTING UNIT ⌇100

CONTROL UNIT ⌇200

STORING UNIT ⌇400

LIGHTING UNIT INFORMATION ⌇401

CONTROL PATTERN INFORMATION ⌇402

LIGHTING UNIT ⌇300A

LIGHTING UNIT ⌇300B

LIGHTING UNIT ⌇300C

LIGHTING UNIT ⌇300D

# FIG.15A

| ID | DISTANCE | POWER CONSUMPTION | MAXIMUM ILLUMINANCE |
|---|---|---|---|
| L01 | 5 m | 60 W | 40 LUXES |
| ⋮ | ⋮ | ⋮ | ⋮ |

# FIG.15B

| ID | CONTROL PATTERN |
|---|---|
| P01 | $y=-(0.028L+8.61)(x-6)+380$ (L>100 AND x<6)<br>$y=380$ (L≤100 OR x≥6) |
| ⋮ | ⋮ |

# FIG.16A

WINDOW SURFACE AVERAGE BRIGHTNESS: 2500 [cd/m²]

# FIG.16B

WINDOW SURFACE AVERAGE BRIGHTNESS: 300 [cd/m$^2$]

# FIG.16C

WINDOW SURFACE AVERAGE BRIGHTNESS: 50 [cd/m$^2$]

# FIG.17

```
                    ┌─────────────┐
                    │    START    │
                    └──────┬──────┘
                           │              ⌇S1701
                           ▼
        ┌──────────────────────────────────────┐
        │     DETECT AVERAGE BRIGHTNESS          │
        └──────────────────┬─────────────────────┘
                           │              ⌇S1702
                           ▼
        ┌──────────────────────────────────────┐
        │        SELECT CONTROL PATTERN          │
        └──────────────────┬─────────────────────┘
                           │              ⌇S1703
                           ▼
        ┌──────────────────────────────────────┐
        │          CONTROL ILLUMINANCE           │
        └──────────────────┬─────────────────────┘
                           │
                           └───────────────────────►
```